# EUROPÄISCHE PATENTSCHRIFT

(11) **EP 1 051 548 B1**
(45) Veröffentlichungstag und Bekanntmachung des Hinweises auf die Patenterteilung: **05.06.2002**
(21) Anmeldenummer: 99904835.8
(22) Anmeldetag: 01.02.1999
(51) Int. Cl.: D03D 13/00, B29C 53/58, F16L 11/08

(54) **BANDFÖRMIGES TEXTILERZEUGNIS UND VERFAHREN ZUR HERSTELLUNG EINES MIT DEM TEXTILERZEUGNIS VERSTÄRKTEN KÖRPERS**
RIBBON-LIKE TEXTILE PRODUCT AND METHOD FOR PRODUCING A BODY REINFORCED WITH SAID TEXTILE PRODUCT
PRODUIT TEXTILE EN FORME DE RUBAN ET PROCEDE POUR LA PRODUCTION D'UN CORPS RENFORCE AVEC CE PRODUIT TEXTILE

(30) Priorität: 30.01.1998 DE 19803656
(43) Veröffentlichungstag der Anmeldung: 15.11.2000
(73) Patentinhaber: MILLIKEN EUROPE N.V., B-9000 Gent (BE)
(72) Erfinder: DE MEYER, Willy, B-9031 Drongen (BE); GILPATRICK, Michael, Chesnee, SC 27323 (US)
(74) Vertreter: HOFFMANN - EITLE
(86) Internationale Anmeldenummer: EP9900628
(87) Internationale Veröffentlichungsnummer: WO9939032

(56) Entgegenhaltungen:
- EP-A- 0 402 099
- EP-A- 0 425 099
- DE-B- 2 626 217
- GB-A- 2 117 418
- GB-A- 2 159 845
- US-A- 4 055 697

## Beschreibung

Die Erfindung betrifft ein bandförmiges Textilerzeugnis, insbesondere aus Filamenten, Fäden oder Garn, zur Verwendung als Verstärkungslage für Schläuche, Rohre, Druckbehälter und ähnliche Körper gemäß dem Oberbegriff des Patentanspruchs 1 sowie ein Verfahren zur Herstellung eines mit dem Textilerzeugnis verstärkten Schlauches, Rohres, Druckbehälters oder ähnlichen Körpers.

Es ist allgemein bekannt, die Festigkeit (gemeint ist hier insbesondere der Berstdruck) eines Schlauches, Rohres, Druckbehälters oder ähnlichen Hohlkörpers dadurch zu erhöhen, daß die Wandung des Körpers mit einer Lage aus Verstärkungsmaterial versehen wird. Üblicherweise handelt es sich bei dieser Verstärkungslage um ein textiles Produkt, beispielsweise um einen oder mehrere schraubenförmig gewickelte Fäden oder auch um Gewebeeinlagen. Die Aufbringung solcher Verstärkungslagen ist zeit- und arbeitsaufwendig. Wird nur eine Verstärkungslage aufgebracht, kommt es aufgrund der anisotropen Eigenschaften der verwendeten Textilerzeugnisse nicht zum gewünschten Verstärkungseffekt, so daß häufig mindestens zwei und oft noch mehr Verstärkungslagen auf die Körperwandung aufgebracht werden müssen.

Der Erfindung liegt die Aufgabe zugrunde, ein zur Verwendung als Verstärkungslage geeignetes Textilerzeugnis anzugeben, das einfach herzustellen ist und das schon bei Einsatz nur einer einzigen Lage einen gegenüber herkömmlich verwendeten Textilerzeugnissen deutlich verbesserten Verstärkungseffekt erbringen kann. Der Erfindung liegt des weiteren die Aufgabe zugrunde, ein Verfahren anzugeben, mit dem auf einfache Weise unter Verwendung des bereitgestellten Textilerzeugnisses ein Schlauch, ein Rohr, ein Druckbehälter oder ein ähnlicher Hohlkörper wirkungsvoll und kostengünstig verstärkt werden kann.

Diese Aufgabe ist ausgehend von einem gattungsgemäßen, bandförmigen Textilerzeugnis mit einer in Längsrichtung des Textilerzeugnisses verlaufenden Kettrichtung und einer Schußrichtung erfindungsgemäß dadurch gelöst, daß der Schuß des Textilerzeugnisses unter einem Winkel von zumindest ungefähr 70 Grad zur Kette verläuft, und daß zumindest auf einer Seite des bandförmigen Textilerzeugnisses der Schuß ein Stück über die seitlichste Kette hinaussteht. Mit "Kette" und "Schuß" ist hier die Gesamtheit der Kettfäden oder -garne oder -filamente bzw. der Schußfäden oder -garne oder -filamente gemeint, also die gesamte Kettstruktur bzw. Schußstruktur des Textilerzeugnisses.

Indem erfindungsgemäß der Schuß unter einem Winkel von zumindest ungefähr 70 Grad (optimal sind 70°32') zur Kette verläuft und zumindest auf einer Seite ein Stück weit über die randäußerste Kette hinaussteht, kann ein solches bandförmiges Textilerzeugnis in einer hinsichtlich des Verstärkungseffektes optimalen Weise auf einen zu verstärkenden Körper aufgebracht werden. Der unter einem Winkel von zumindest ungefähr 70 Grad zur Kette verlaufende Schuß des erfindungsgemäßen Textilerzeugnisses ermöglicht es dabei, das Textilerzeugnis so auf den zu verstärkenden Körper aufzubringen, daß sowohl die Kette als auch der Schuß des erfindungsgemäßen Textilerzeugnisses unter einem Winkel von knapp 55 Grad zur Längsrichtung des zu verstärkenden Hohlkörpers verlaufen. Dieser Winkel, der in der Literatur häufig auch in bezug auf eine normal zur Längsrichtung stehende Richtung angegeben wird und dann etwas mehr als 35 Grad beträgt (im optimalen Fall (35°16'), ist auch als sogenannter neutraler Winkel bekannt. Mit "ungefähr 70 Grad" ist im Rahmen der vorliegenden Anmeldung gemeint, daß der Winkel nicht genau 70 Grad betragen muß, sondern in einem Bereich von beispielsweise 60 - 80 Grad liegen kann. Grundsätzlich gilt, daß die verstärkende Wirkung des erfindungsgemäßen Textilerzeugnisses nach dem Aufbringen auf einen zu verstärkenden Körper umso schlechter ist, je weiter der Winkel von dem optimalen Wert 70°32' abweicht, weil dann nicht mehr sowohl die Kette als auch der Schuß unter dem erwähnten optimalen Winkel von knapp 55 Grad verlaufen können. Allerdings kann es für bestimmte Anwendungsfälle vorteilhaft sein, das erfindungsgemäße Textilerzeugnis so auszubilden, daß sich der Winkel von etwa 55 Grad erst dann einstellt, wenn der mit dem erfindungsgemäßen Textilerzeugnis verstärkte Körper unter einer Innendruckbelastung steht, wie sie im Betrieb des jeweiligen Körpers üblicherweise auftritt. Das kann bedeuten, daß der Schuß des erfindungsgemäßen Textilerzeugnisses im unbelasteten Zustand unter einem Winkel verläuft, der mehr oder weniger deutlich von 70 Grad abweicht.

Der zumindest auf einer Seite ein Stück über die äußerste Kette hinausstehende Schuß des erfindungsgemäßen Textilerzeugnisses führt beim Aufwickeln desselben auf den zu verstärkenden Körper zu einem besseren Verbund der sich beim Aufwickeln überlappenden Randbereiche des Textilerzeugnisses untereinander. Darüber hinaus finden die überstehenden Schußstücke des erfindungsgemäßen Textilerzeugnisses einen guten Halt in der Matrix, die das Textilerzeugnis im fertigen Zustand des verstärkten Körpers umgibt. Auf diese Weise, also durch den besseren Verbund der einzelnen Wicklungen untereinander in Schußrichtung und durch die bessere Verankerung des Schusses in der Matrix hat das erfindungsgemäße Textilerzeugnis nicht nur in Kettrichtung, sondern auch in Schußrichtung praktisch gleich gute Verstärkungseigenschaften.

Gemäß einer Alternative des erfindungsgemäßen Textilerzeugnisses verläuft der Schuß unter einem Winkel von zumindest ungefähr 70 Grad zur Kette und die Kettstruktur ist auf zumindest einer Seite des Textilerzeugnisses in einem Randbereich dünner ausgebildet als die restliche Kettstruktur. Dies eröffnet die Möglichkeit, den entsprechenden Randbereich beim Wickeln auf einen zu verstärkenden Körper mit der nächsten, sich axial anschließenden Wicklung überlappen zu lassen, ohne in dem Überlappungsbereich die Gesamtdicke der Verstärkungslage zu vergrößern. Analog zu den seitlich herausstehenden Schußstücken führt die Überlappung der Randbereiche mit der dünner ausgebildeten Kettstruktur zu einem besseren Verbund der einzelnen Wicklungen untereinander in Schußrichtung sowie zu einer besseren Verankerung des kritischen Übergangsbereiches von einer Wicklung zur nächsten in der Matrix und damit zu ähnlich guten Festigkeitseigenschaften wie die zuerst genannte Alternative des erfindungsgemäßen Textilerzeugnisses.

Vorteilhaft können die beiden Alternativen auch kombiniert werden, d.h. es ist auf zumindest einer Seite des bandförmigen Textilerzeugnisses in einem Randbereich die Kettstruktur dünner ausgebildet als die restliche Kettstruktur und es steht auf dieser Seite (und/oder auf der anderen Seite) der Schuß ein Stück über die äußerste Kette hinaus. Die Festigkeitseigenschaften und damit die Verstärkungswirkung des erfindungsgemäßen Textilerzeugnisses können so nochmals verbessert werden.

In einer Weiterbildung des erfindungsgemäßen Textilerzeugnisses bestehen auf zumindest einer Seite desselben in einem Randbereich die Ketten bzw. die Kettstruktur aus einem anderen Material als die restliche Kettstruktur. So kann beispielsweise trotz einer dünneren Kettstruktur eine der restlichen Kettstruktur entsprechende Zugfestigkeit auch in dem Randbereich erhalten werden.

In bevorzugten Ausführungsformen ist das erfindungsgemäße, bandförmige Textilerzeugnis ein Gelege. Gelege sind für den angegebenen Zweck besonders vorteilhaft, da kein Einschneiden der Kettstruktur in die Schußstruktur und umgekehrt stattfindet. Eine Schwächung der jeweiligen Strukturen an den Kreuzungspunkten ist daher bei einem Gelege vermieden. Zusätzlich sorgt die erforderliche, das Gelege fixierende Matrix für eine Trennung der einzelnen Fäden, Filamente oder Garne voneinander. Darüber hinaus läßt sich ein Gelege sehr schnell und damit kostengünstig fertigen. Anstatt eines Geleges kann das erfindungsgemäße Textilerzeugnis jedoch ohne funktionelle Nachteile auch ein Gewebe, ein Gewirk, ein Gestrick oder ähnliches sein.

Das erfindungsgemäße Verfahren zeichnet sich durch den Schritt des Wickelns eines zuvor beschriebenen Textilerzeugnisses auf einen Kern eines Schlauches, Rohres, Druckbehälters oder ähnlichen Hohlkörpers aus. Das Wickeln wird dabei derart vorgenommen, daß die Kette bzw. die Kettstruktur des Textilerzeugnisses unter einem Winkel von zumindest ungefähr 55 Grad zur Längsrichtung des zu verstärkenden Körpers verläuft und daß die über die äußerste Kette hinausstehenden Schußstücke und/oder die jeweils aneinandergrenzenden Randbereiche des bandförmigen Textilerzeugnisses überlappen, in denen die Kettstruktur dünner als die übrige Kettstruktur ausgebildet ist. Wie bereits erläutert, verläuft dann sowohl die Kettrichtung als auch die Schußrichtung eines erfindungsgemäßen Textilerzeugnisses in einem unter Festigkeitsgesichtspunkten optimalen Winkel von zumindest ungefähr 55 Grad zur Längsrichtung (35 Grad zur Querrichtung) des zu verstärkenden Körpers, wodurch im Zusammenspiel mit den besser verankerten und besser miteinander verbundenen Randbereichen des bandförmigen Textilerzeugnisses mit nur einer einzigen Lage desselben eine hervorragende Verstärkungswirkung erreicht wird. Gegenüber den bisher für eine solche Verstärkung erforderlichen zwei Verstärkungslagen kann bei der Herstellung beispielsweise eines Schlauches, der mit einem erfindungsgemäßen Textilerzeugnis verstärkt wird, eine Wickelstation eingespart werden.

Bei einer Abwandlung des erfindungsgemäßen Verfahrens wird das Textilerzeugnis so auf den zu verstärkenden Körper gewickelt, daß sich der Winkel von zumindest ungefähr 55 Grad zur Längsrichtung des zu verstärkenden Körpers erst unter der im Betrieb des jeweiligen Körpers üblichen Innendruckbelastung einstellt. Das bedeutet, daß beim Umwickeln des zu verstärkenden Körpers die Kette des Textilerzeugnisses noch nicht in dem angestrebten Winkel von ungefähr 55 Grad zur Längsrichtung des zu verstärkenden Körpers verläuft.

Um das der Verstärkung dienende Textilerzeugnis in eine gute, lasttragende Verbindung mit dem zu verstärkenden Körper zu bringen, wird das Textilerzeugnis gemäß einer Ausgestaltung des erfindungsgemäßen Verfahrens auf eine Schicht weiches, sich später jedoch verfestigendes Matrixmaterial gewickelt. Das Textilerzeugnis geht dann mit dem Matrixmaterial den gewünschten, innigen Verbund ein.

Gemäß einer Alternative kann das Textilerzeugnis auch zunächst auf den genannten Kern (beispielsweise eine Innenlage) des zu verstärkenden Körpers gewickelt werden und danach wird eine Schicht aus weichem und sich später verfestigendem Matrixmaterial auf das Textilerzeugnis aufgebracht.

Gemäß einer weiteren Alternative kann das Textilerzeugnis selbst das Matrixmaterial bereits enthalten, so daß durch eine Temperaturerhöhung, die den Rest des Textilerzeugnisses unverändert läßt, das Matrixmaterial weich wird und sich im Zuge einer späteren Abkühlung, die nach dem Aufbringen des Textilerzeugnisses auf den genannten Kern erfolgt, wieder verfestigt. Bei der letztgenannten Ausgestaltung kann das Matrixmaterial Teil eines Faden oder Garns des Textilerzeugnisses sein. Beispielsweise können die verwendeten Fäden aus zwei Komponenten bestehen, von denen die eine Komponente das Matrixmaterial und die zweite Komponente das tragende Material darstellt. Ebenso können Garne aus verschiedenen Fäden oder Fasern eingesetzt werden, wobei wiederum bestimmte Fäden oder Fasern die tragende Funktion übernehmen und andere Fäden oder Fasern das Matrixmaterial bereitstellen.

Wenn vorstehend von einem sich später wieder verfestigenden Matrixmaterial gesprochen worden ist, so kann dies je nach Anwendungsfall bedeuten, daß das Matrixmaterial starr wird (z.B. bei der Herstellung von verstärkten Rohren), es kann jedoch auch bedeuten, daß das Matrixmaterial zwar fest wird, dabei aber elastisch bleibt (z.B. bei der Herstellung von flexiblen Schläuchen). Das Matrixmaterial kann mit dem Material übereinstimmen, aus dem der zu verstärkende Körper besteht (beispielsweise bei Schläuchen oder Rohren aus Kunststoff), oder es kann ein anderes Material sein.

Zur besseren Erläuterung der Erfindung wird im folgenden Bezug genommen auf zwei Figuren, von denen
- Fig. 1: ein Ausführungsbeispiel eines erfindungsgemäßen Textilerzeugnisses zeigt und
- Fig. 2: das Textilerzeugnis aus Fig. 1 beim Wickeln auf ein Rohr zeigt.

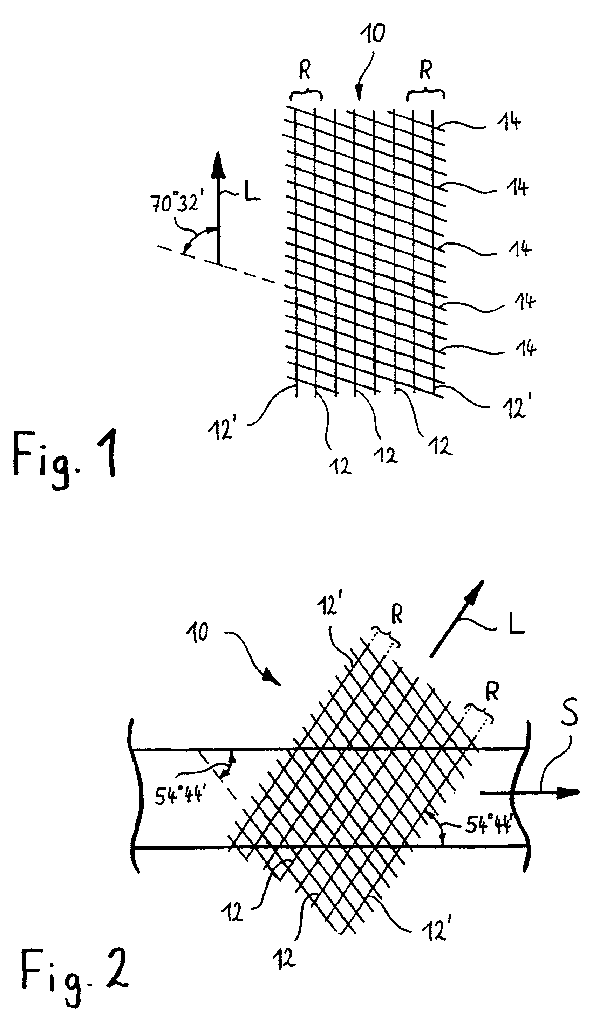

Fig. 1 zeigt einen Abschnitt eines hier als Gelege ausgebildeten, bandförmigen Textilerzeugnisses 10 mit in Längsrichtung L verlaufenden Kettfäden 12 und Schußfäden 14. Wie dargestellt, verlaufen die Schußfäden 14 unter einem Winkel von 70°32' zur Längsrichtung L und damit zu den Kettfäden 12.

Auf beiden Seiten des Textilerzeugnisses 10 stehen die Schußfäden 14 ein Stück über den jeweils äußersten Kettfaden 12' hinaus. In der Praxis liegt dieser seitliche Überstand in der Größenordnung von wenigstens etwa einem Millimeter und hängt von dem geforderten Berstdruck ab. Je höher der gewünschte Berstdruck ist, desto größer muß der seitliche Überstand sein, um auch in den unten beschriebenen Überlappungsbereichen zwischen zwei Wicklungen eine ausreichend belastbare Verhaftung des Textilerzeugnisses in der es umgebenden Matrix zu erzielen.

In einem Randbereich R des Textilerzeugnisses, der hier jeweils zwei Kettfäden 12 umfaßt, sind die Kettfäden 12 dünner als die übrigen Kettfäden 12 ausgeführt. Beim Wickeln auf einen zu verstärkenden Körper kann dann der Randbereich R mit dem Randbereich R einer sich axial anschließenden Wicklung überlappen, ohne daß sich die Gesamtdicke der durch das Textilerzeugnis 10 gebildeten Verstärkungslage im Überlappungsbereich von der Dicke des Textilerzeugnisses in nicht überlappten Bereichen unterscheidet, d.h. ohne daß es längs des zu verstärkenden Körpers zu Dickenänderungen der Verstärkungslage kommt.

Aus Fig. 2 ist ersichtlich, wie das in Fig. 1 dargestellte Textilerzeugnis 10 um einen zu verstärkenden Körper, hier ein Rohr, zu wickeln ist. Bezogen auf die Längsrichtung S des Rohres wird das Textilerzeugnis 10 so auf eine Innenlage 16 des Rohres gewickelt, daß die Kettfäden 12 unter einem Winkel von 54°44' zur Längsrichtung S verlaufen. Automatisch sind dann auch die Schußfäden 14 unter einem Winkel von 54°44' zur Längsachse S des Rohres und damit unter dem im Hinblick auf die verstärkende Wirkung optimalen Winkel angeordnet. Aufgrund der im Randbereich R des Textilerzeugnisses 10 überlappenden Wicklungen ist die durch das Textilerzeugnis 10 erzielte Verstärkung in Schußrichtung praktisch genauso hoch wie in Kettrichtung.

## Patentansprüche

1. Bandförmiges Textilerzeugnis (10), insbesondere aus Filamenten, Fäden, oder Garn, zur Verwendung als Verstärkungslage für Schläuche, Rohre, Druckbehälter und ähnliche Hohlkörper, und einer Schußrichtung,
**dadurch gekennzeichnet, daß**
- der Schuß (14) des Textilerzeugnisses unter einem Winkel von ungefähr 70 Grad zur Kette (12) verläuft, und daß
- auf einer Seite des bandförmigen Textilerzeugnisses der Schuß (14) ein Stück über die seitlichste Kette (12') hinaussteht.

2. Bandförmiges Textilerzeugnis (10), insbesondere aus Filamenten, Fäden, oder Garn, zur Verwendung als Verstärkungslage für Schläuche, Rohre, Druckbehälter und ähnliche Hohlkörper, und einer Schußrichtung,
**dadurch gekennzeichnet, daß**
- der Schuß (14) des Textilerzeugnisses unter einem Winkel von ungefähr 70 Grad zur Kette (12) verläuft, und daß
- auf einer Seite des bandförmigen Textilerzeugnisses in einem Randbereich (R) die Ketten (12) dünner als die übrigen Ketten (12) ausgebildet sind.

3. Textilerzeugnis nach Anspruch 2,
**dadurch gekennzeichnet, daß** zumindest auf einer Seite des bandförmigen Textilerzeugnisses der Schuß (14) ein Stück über die seitlichste Kette (12') hinaussteht.

4. Textilerzeugnis nach einem der Ansprüche 1 bis 3,
**dadurch gekennzeichnet, daß** auf zumindest einer Seite des bandförmigen Textilerzeugnisses in einem Randbereich (R) die Ketten (12) aus einem anderen Material bestehen als die übrigen Ketten (12).

5. Textilerzeugnis nach einem der vorhergehenden Ansprüche,
**dadurch gekennzeichnet, daß** es ein Gewebe, ein Gewirk, ein Gestrick, oder insbesondere ein Gelege ist.

6. Verfahren zur Herstellung eines Schlauches, Rohres, Druckbehälters oder ähnlichen Körpers,
**gekennzeichnet durch** den Schritt des Wickeins eines Textilerzeugnisses gemäß einem der vorhergehenden Ansprüche auf einen Kern eines Schlauches, Rohres, Druckbehälters oder ähnlichen Hohlkörpers derart, daß die Kette des Textilerzeugnisses unter einem Winkel von ungefähr 55 Grad zur Längsrichtung des Schlauches, Rohres, Druckbehälters oder ähnlichen Hohlkörpers verläuft und daß der ein Stück über die seitlichste Kette hinausstehende Schuß und/oder die jeweils aneinandergrenzenden Randbereiche des bandförmigen Textilerzeugnisses überlappen, in denen die Ketten dünner als die übrigen Ketten ausgebildet sind.

7. Verfahren zur Herstellung eines Schlauches, Rohres, Druckbehälters oder ähnlichen Körpers,
**gekennzeichnet durch** den Schritt des Wickelns eines Textilerzeugnisses gemäß einem der vorhergehenden Ansprüche auf einen Kern eines Schlauches, Rohres, Druckbehälters oder ähnlichen Hohlkörpers derart, daß die Kette des Textilerzeugnisses unter einem Winkel von ungefähr 55 Grad zur Längsrichtung des Schlauches, Rohres, Druckbehälters oder ähnlichen Hohlkörpers verläuft, wenn der zu verstärkende Körper der im Betrieb üblichen Innendruckbelastung ausgesetzt ist, und daß der ein Stück über die seitlichste Kette hinausstehende Schuß und/oder die jeweils aneinandergrenzenden Randbereiche des bandförmigen Textilerzeugnisses überlappen, in denen die Ketten dünner als die übrigen Ketten ausgebildet sind.

8. Verfahren nach Anspruch 6 oder 7,
**dadurch gekennzeichnet, daß** das Textilerzeugnis auf eine Schicht weiches, sich später verfestigendes Matrixmaterial gewickelt wird.

9. Verfahren nach Anspruch 6 oder 7,
**dadurch gekennzeichnet, daß** auf das Textilerzeugnis nach dem Aufwickeln auf den genannten Kern eine Schicht weiches, sich später verfestigendes Matrixmaterial aufgebracht wird.

10. Verfahren nach Anspruch 6 oder 7,
**dadurch gekennzeichnet, daß** das Textilerzeugnis ein Matrixmaterial enthält, das durch eine Temperaturerhöhung, die den Rest des Textilerzeugnisses unverändert läßt, weich wird und sich im Zuge einer Abkühlung wieder verfestigt.

11. Verfahren nach Anspruch 10,
**dadurch gekennzeichnet, daß** das Matrixmaterial Teil eines Fadens oder Garns des Textilerzeugnisses ist.

## Claims

1. Strip-shaped textile product (10), made in particular of filaments, threads or yarn, for use as a reinforcing layer for hoses, tubes, pressure containers and similar hollow articles and a weft direction, **characterized in that**
- the weft (14) of the textile product runs at an angle of approximately 70 degrees to the warp (12) and that
- on one side of the strip-shaped textile product the weft (14) projects out a little beyond the side-most warp (12').

2. Strip-shaped textile product (10), made in particular of filaments, threads or yarn, for use as a reinforcing layer for hoses, tubes, pressure containers and similar hollow articles and a weft direction, **characterized in that**
- the weft (14) of the textile product runs at an angle of approximately 70 degrees to the warp (12) and that
- on one side of the strip-shaped textile product in a peripheral region (R) the warps (12) are of thinner construction than the other warps (12).

3. Textile product according to Claim 2, **characterized in that** at least on one side of the strip-shaped textile product the weft (14) projects out a little beyond the side-most warp (12').

4. Textile product according to one of Claims 1 to 3, **characterized in that** on at least one side of the strip-shaped textile product in a peripheral region (R) the warps (12) are composed of a different material than the other warps (12).

5. Textile product according to one of the preceding claims, **characterized in that** it is a woven fabric, hosiery, a knitted fabric or in particular a scrim structure.

6. Method for producing a hose, tube, pressure container or similar article **characterized by** the step of winding a textile product according to one of the preceding claims onto a core of a hose, tube, pressure container or similar hollow article in such a way that the warp of the textile product runs at an angle of approximately 55 degrees to the longitudinal direction of the hose, tube, pressure container or similar hollow article and that the weft projecting out a little beyond the side-most warp and/or the peripheral regions of the strip-shaped textile product in each case adjoining one another, in which the warps are of thinner construction than the other warps, overlap.

7. Method for producing a hose, tube, pressure container or similar article **characterized by** the step of winding a textile product according to one of the preceding claims onto a core of a hose, tube, pressure container or similar hollow article in such a way that the warp of the textile product runs at an angle of approximately 55 degrees to the longitudinal direction of the hose, tube, pressure container or similar hollow article when the article to be reinforced is exposed to the internal pressure stress usual in production and that the weft projecting out a little beyond the side-most warp and/or the peripheral regions of the strip-shaped textile product in each case adjoining one another, in which the warps are of thinner construction than the other warps, overlap.

8. Method according to Claim 6 or 7, **characterized in that** the textile product is wound onto a layer of soft matrix material which later hardens.

9. Method according to Claim 6 or 7, **characterized in that** onto the textile product after winding onto said core a layer of soft, subsequently hardening matrix material is applied.

10. Method according to Claim 6 or 7, **characterized in that** the textile product contains a matrix material which due to a temperature increase which leaves the rest of the textile product unchanged becomes soft and hardens once more in the course of cooling.

11. Method according to Claim 10, **characterized in that** the matrix material is part of a thread or yarn of the textile product.

## Revendications

1. Produit textile en forme de ruban (10), en particulier à partir de filaments, filés, ou fils, pour l'utilisation comme couche de renforcement pour des tuyaux, tubes, réservoirs sous pression et corps creux similaires, et avec une direction de trame, **caractérisé en ce que**
- la trame (14) du produit textile forme un angle d'environ 70 degrés avec la chaîne, et **en ce que**
- sur un côté du produit textile en forme de ruban la trame (14) dépasse d'une partie sur la chaîne la plus latérale (12').

2. Produit textile en forme de ruban (10), en particulier à partir de filaments, filés, ou fils, pour l'utilisation comme couche de renforcement pour des tuyaux, tubes, réservoirs sous pression et corps creux similaires, et avec une direction de trame, **caractérisé en ce que**
- la trame (14) du produit textile forme un angle d'environ 70 degrés avec la chaîne, et **en ce que**
- sur un côté du produit textile en forme de ruban dans un domaine de lisière (R) les chaînes sont formées plus fines que les chaînes restantes (12).

3. Produit textile selon la revendication 2, **caractérisé en ce qu'**au moins sur un côté du produit textile en forme de ruban la trame (14) dépasse d'une partie sur la chaîne la plus latérale (12').

4. Produit textile selon une des revendications 1 à 3, **caractérisé en ce que** sur au moins un côté du produit textile en forme de ruban dans un domaine de lisière (R) les chaînes (12) sont constituées d'un autre matériau que les chaînes restantes (12).

5. Produit textile selon l'une des revendications précédentes, **caractérisé en ce que** c'est un tissu, un tricot, un tricoté, ou en particulier un couché.

6. Procédé de fabrication d'un tuyau, tube, réservoir sous pression ou corps creux similaire, **caractérisé par** l'étape consistant à enrouler un produit textile selon une des revendications précédentes sur le noyau d'un tuyau, tube, réservoir sous pression ou corps creux similaire, de manière que la chaîne du produit textile soit disposée selon un angle d'environ 55 degrés par rapport à la direction longitudinale du tuyau, tube, réservoir sous pression ou corps creux similaire et que la trame dépassant d'une partie la chaîne la plus latérale et/ou les domaines de lisière chaque fois contigus du produit textile en forme de ruban se recouvrent, dans lesquels les chaînes sont formées plus fines que les chaînes restantes.

7. Procédé de fabrication d'un tuyau, tube, réservoir sous pression ou corps creux similaire, **caractérisé par** l'étape consistant à enrouler un produit textile selon une des revendications précédentes sur le noyau d'un tuyau, tube, réservoir sous pression ou corps creux similaire, de manière que la chaîne du produit textile soit disposée selon un angle d'environ 55 degrés par rapport à la direction longitudinale du tuyau, tube, réservoir sous pression ou corps creux similaire, quand le corps à renforcer est prévu de fonctionner avec une charge de pression interne habituelle, et que la trame dépassant d'une partie la chaîne la plus latérale et/ou les domaines de lisière chaque fois contigus du produit textile en forme de ruban se recouvrent, dans lesquels les chaînes sont formées plus fines que les chaînes restantes.

8. Procédé selon la revendication 6 ou 7, **caractérisé en ce que** le produit textile est enroulé en une couche d'un matériau de matrice mou se solidifiant plus tard.

9. Procédé selon la revendication 6 ou 7, **caractérisé en ce que** le produit textile est amené après l'enroulement sur ledit noyau en une couche d'un matériau de matrice mou se solidifiant plus tard.

10. Procédé selon la revendication 6 ou 7, **caractérisé en ce que** le produit textile contient un matériau de matrice qui, par une augmentation de température qui ne modifie pas le reste du produit textile, devient mou et se solidifie de nouveau au cours d'un refroidissement.

11. Procédé selon la revendication 10, **caractérisé en ce que** le matériau de matrice est une partie d'un fil ou filé du produit textile.
